# EUROPÄISCHE PATENTSCHRIFT

(11) **EP 0 745 949 B1**
(45) Veröffentlichungstag und Bekanntmachung des Hinweises auf die Patenterteilung: **19.03.2003**
(21) Anmeldenummer: 96106240.3
(22) Anmeldetag: 20.04.1996
(51) Int. Cl.: G06K 7/06, G06K 13/08

(54) **Schreib/Lesevorrichtung für Datenträger**
Read/write device for data carriers
Dispositif de lecture/écriture de porteurs de données

(30) Priorität: 03.06.1995 DE 19520537
(43) Veröffentlichungstag der Anmeldung: 04.12.1996
(73) Patentinhaber: Blaupunkt-Werke GmbH, 31132 Hildesheim (DE)
(72) Erfinder: Althoff, Jürgen, Gualtar, 4700 Bruga (PT); Hapke, Walter, Felixtowe, Suffolk IP11 7JJ (GB)
(74) Vertreter: Friedmann, Jürgen, Dr.-Ing.

(56) Entgegenhaltungen:
- EP-A- 0 363 992
- DE-A- 3 625 306
- DE-A- 3 916 783
- US-A- 4 717 817

## Beschreibung

Die Erfindung betrifft eine Schreib/Lese-Vorrichtung mit den Merkmalen des Oberbegriffs des Anspruches 1.

Datenträger in Form von maschinenlesbaren Karten, insbesondere in Form von Chip-Karten haben in den letzten Jahren zunehmend an Bedeutung gewonnen, da sie als Informationsträger ausgesprochen handlich sind. Beispiele sind Telefon-Wertkarten für öffentliche Telefone oder sogenannte "KeyCards", die als Schlüssel verwendet werden und beispielsweise den Diebstahl eines Autoradios erschweren sollen.

Zum Auslesen der Karte in einem entsprechenden Automaten wird diese bei manchen Schreib/Lese-Vorrichtungen in einen Transportschlitten oder -wagen eingelegt, der die Karte aus einer Öffnungsstellung in die Schreib/Lese-Stellung transportiert. Dabei wird die Karte durch den Schlitten in der Schreib/Lese-Stellung gehalten. Nachteilig ist bei manchen Schreib/Lese-Vorrichtungen, daß der Transportschlitten während des Schreib- oder Lesevorganges willkürlich durch den Benutzer gelöst werden kann, beispielsweise, wenn dieser in Eile ist. Nachteilig ist hierbei, daß der Schreib- oder Lesevorgang hierdurch ungeplant unterbrochen wird, wodurch es zu Störungen kommen kann, im schlimmsten Fall zu einem Verlust der auf der Karte gespeicherten Daten. Dies ist bei zahlreichen Anwendungsfällen nicht hinnehmbar, beispielsweise bei Chip-Karten, deren gespeicherte Daten ein Guthaben darstellen, beispielsweise in Form von Telefoneinheiten, oder aber bei den zuvor erwähnten Schlüssel-Karten, deren ordnungsgemäßes Funktionieren als Schlüssel nach einer solchen Fehlspeicherung von Daten nicht mehr gewährleistet ist.

Es sind daher verschiedene Schreib/Lese-Vorrichtungen bekannt geworden, bei denen ein willkürliches Unterbrechen des Schreib/-Lese-Vorganges durch Auslösen des Transportschlittens oder Wagens unmöglich gemacht wird.

Bei einem Vorrichtungstyp wird der Transportschlitten durch einen elektrischen Magneten, d.h. ein Solenoid, in der Schreib/-Lesestellung fixiert, solange die Vorrichtung eingeschaltet ist. Dabei wird ein Abschalten des Erregerstroms des Elektromagneten durch eine Steuerschaltung nur dann zugelassen, wenn kein Schreib/Lese-Vorgang abläuft. Nachteilig ist an dieser Vorrichtung, daß durch das in unmittelbarer Nähe der auszulesenden Karte angeordnete, durch den Elektromagneten erzeugte Magnetfeld der Schreib/Lese-Vorgang gestört werden kann, was zu den bereits eingangs geschilderten Nachteilen führt. Darüber hinaus ist bei einer solchen Konstruktion das Solenoid bzw. der Magnet ständig mit einem Strom beaufschlagt was zu einer zusätzlichen Verlustleistung und damit einer zusätzlichen Erwärmung des Gehäuse-Innenraums des Autoradios führt. Darüber hinaus muß zusätzlicher Aufwand getrieben werden, um den Magneten temperaturfest zu machen, indem für eine ausreichende Wärmeableitung gesorgt wird.

Bei einem anderen, beispielsweise aus US-A-4 717 817 bekannten Typ rastet der Schlitten beim Einschieben in eine Schreib-/Lesestellung in einem Rasthaken ein. Das Entriegeln erfolgt durch einen Impuls eines Elektromagneten, der den Rasthaken ausrastet. Auch dieses wird nur ermöglicht, wenn kein Schreib-/Lesevorgang abläuft. Nachteilig ist an dieser Ausführungsform einer Schreib-/Lesevorrichtung, daß bei einem Stromausfall, beispielsweise verursacht durch erschöpfte Batterien, oder bei ausgebautem Autoradio kein Entriegeln und damit Freigeben der Karte möglich ist.

Nachteilig bei Verwendung von Impulsmagneten, d. h. Magneten, die einen großen Luftspalt überwinden müssen und ein bewegliches Metallteil mit einem Impuls beaufschlagen, ist weiterhin, daß sie deutlich stärker sein müssen als z. B. ein Haltemagnet, d. h. ein Magnet, der ein metallisches Joch lediglich in seiner Position fixieren soll. Außer den höheren Kosten und Abmessungen des Impulsmagneten selbst fallen noch einmal höhere Kosten für den üblicherweise in Reihe geschalteten Leistungstransistor an. Die insgesamt höhere Verlustleistung führt wiederum zu einer unerwünschten Aufheizung des Gehäuse-Innenraums.

DE-A-39 16 783 offenbart einen Chipkartenleser mit einer Schublade zur Aufnahme der zu lesenden Chipkarte, die in eine Lesestellung verschiebbar ist, wobei die Schublade in der Lesestellung mittels in Ausnehmungen der Schublade eingreifende Bolzen arretierbar ist.

EP-A-0 363 992 A2 offenbart einen Chipkartenleser mit Sicherung zur Verhinderung einer Kartenentnahme während eines Schreib-/Lesevorgangs. Die Sicherung ist in Form eines Verriegelungshakens ausgeführt, die die Karte nach ihrem Einführen in eine Kartenaufnahme (in Einschubrichtung) hintergreift, also eine Entnahme der Karte verhindert. Der Verriegelungshaken ist beispielsweise mittels eines Solenoids verschwenkbar.

Bekannt geworden sind auch Ausführungsformen, bei denen die Karte selbst ohne Zwischenschaltung eines Transportschlittens in eine Schreib-/Lesestellung eingeführt und dort verriegelt wird.

Schließlich sind, beispielsweise aus DE-A-36 25 306 oder US-A-4 717 817, Schreib-/Lesevorrichtungen mit Transportschlitten bekannt, die eine den Tranportschlitten in der Schreib-/Lesestellung haltende Rastmechanik aufweisen, die den von Kugelschreibern ähnelt. Zum Auslösen der Transportschlittens, d. h. Rückführung in die Öffnungsstellung, ist es erforderlich, den Transportschlitten um einen sogenannten Ausrasthub über die Schreib-/Lesestellung hinaus zu bewegen.

Die Ansprüche sind gegen DE-3625306 abgegrenzt.

Bei diesen gattungsgemäßen Schreib/Lese-Vorrichtungen ist ein versehentliches oder willkürliches Unterbrechen eines Schreiboder Lesevorganges ohne weiteres möglich, allerdings unerwünscht.

Ausgehend von einer gattungsgemäßen Schreib/Lese-Vorrichtung liegt der Erfindung daher die Aufgabe zugrunde, die gattungsgemäße Vorrichtung so weiter zu entwickeln, daß die oben erwähnten Nachteile vermieden werden. Dabei soll die zu schaffende Lösung mit einem minimalen Teile-Aufwand auskommen, nur einen geringen Platzbedarf haben und geringe Kosten verursachen. Weiterhin soll die auszulesende Karte auch bei Spannungslosigkeit der Schreib/Lese-Vorrichtung entnommen werden können und bei abfallender Betriebsspannung nicht ungewollt ausgeworfen werden. Beispielsweise soll die einem Autoradio zugeordnete sogenannte "KeyCard" auch bei ausgebautem Radio entnommen werden können, und Betriebsschwankungen im Bordnetz des Kraftfahrzeuges sollen nicht zu einem ungewollten Auswerfen der "KeyCard" führen. Ein weiterer Aspekt der Aufgabe ist es, daß bei ihrer Lösung die Verwendung von Bauelementen, die eine zusätzliche Wärmequelle im Gerät darstellen, vermieden werden soll.

Die in den Ansprüchen definierte Vorrichtung löst die Aufgabe.

Indem durch eine zusätzliche Verriegelungsanordnung der Ausrasthub des Transportschlittens blockiert wird, wird auf einfache Weise die Möglichkeit geschaffen, ein willkürliches Lösen des Transportschlittens während eines Schreib/Lese-Vorganges zu verhindern.

Vorteilhaft wird insbesondere vorgesehen, daß die zusätzliche Verriegelungsanordnung einen Hebel aufweist, der in einer Verriegelungsstellung einen Anschlag für den Transportschlitten bildet und so den Ausrasthub blockiert.

Dabei ist vorteilhafterweise insbesondere vorgesehen, daß die Verriegelungsvorrichtung in Form des schwenkbaren Hebels mit einer Sperrvorrichtung zusammenwirkt, die im wesentlichen als Solenoid ausgebildet ist. Insbesondere kann vorgesehen sein, daß das Solenoid mit einem Kern und einem an dem Hebel befestigten Anker zusammen einen Haltemagneten bildet, der als Sperrvorrichtung wirkt. Dabei wird vorteilhafterweise eine Steuerschaltung vorgesehen, die den notwendigen Erregerstrom für den Haltemagneten dann bereitstellt, wenn ein Schreib- oder Lesevorgang stattfindet. Auf diese Weise wird der schwenkbare Hebel, der die Verriegelungsvorrichtung darstellt, während des Schreib- oder Lesevorgangs mit vergleichsweise kleinen Kräften gesperrt, so daß er nicht in eine Lösestellung geschwenkt werden kann und der Transportschlitten somit verriegelt ist. Die Konstruktion zeichnet sich insbesondere dadurch aus, daß eine vergleichsweise kleine Kraft ausreicht, um den Transportschlitten trotz der angreifenden vergleichsweise großen manuellen Betätigungskraft zu blockieren.

Vorteilhafterweise ist weiterhin ein Rückstellelement, vorzugsweise in Form einer Zugfeder, vorgesehen, das den Hebel mit vergleichsweise kleinen Kräften in seiner Verriegelungsstellung hält, so daß der Anker, der mit dem Hebel verbunden ist, ständig an dem Kern des Haltemagneten anliegt. Auf diese Weise wird sichergestellt, daß der Haltemagnet bei Einsetzen eines Schreib- /Lesevorganges nur Haltekräfte aufzubringen braucht, nicht jedoch echte Betätigungskräfte zum Überwinden eines zwischen Anker und Kern des Haltemagneten gebildeten Luftspaltes.

Die Kraft des Rückstellelements ist unter Berücksichtigung der Abmessungen bzw. Hebelverhältnisse des als Verriegelungsvorrichtung wirkenden Hebels so bemessen, daß der Transportschlitten bei normalen manuellen Betätigungskräften gegen die Rückstellkraft um den Ausrückhub bewegt werden kann. Auf diese Weise wird sichergestellt, daß bei Spannungsausfall, beispielsweise bei einem ausgebauten Autoradio, die Schreib/Lese-Vorrichtung geöffnet werden kann, d.h. der Transportschlitten ausgefahren werden kann.

Die Erfindung wird im folgenden anhand des in der Zeichnung dargestellten Ausführungsbeispieles näher erläutert.

In der Zeichnung zeigt die einzige Figur einen vereinfacht dargestellten Transportschlitten mit eingelegter, auszulesender Karte und zusätzlicher Verriegelungsanordnung in der Draufsicht.

Ein zu einer Schreib/Lese-Vorrichtung gehörender Transportschlitten 10 ist in einer Schreib/Lesestellung gezeigt und enthält eine Chip-Karte 12. Eine Rückstellfeder 14 ist in der Schreib/Lesestellung des Transportschlittens 10 gespannt und erzeugt eine Rückstellkraft, die den Transportschlitten in die gestrichelt angedeutete Öffnungsstellung 16 treibt. In der Öffnungsstellung kann die Chip-Karte entnommen und eine andere Chip-Karte eingelegt werden.

In der dargestellten Schreib/Lesestellung des Transportschlittens wird dieser durch eine an sich bekannte Rastmechanik 18 an einer rückwärtigen Bewegung gehindert. Die Rastmechanik 18 besteht in an sich bekannter Weise aus einem am Gehäuse 20 der Schreib/Lese-Vorrichtung schwenkbar gelagerten Hakenteil 22 und einem am Boden des Transportschlittens 10 befestigten elastischen Ausleger 24 mit einem Rastbolzen 26.

Um die Rastmechanik zu entriegeln, muß der Transportschlitten in Richtung des Pfeiles 28 um einen Ausrasthub "h" über die dargestellte Schreib/Lesestellung hinaus bewegt werden.

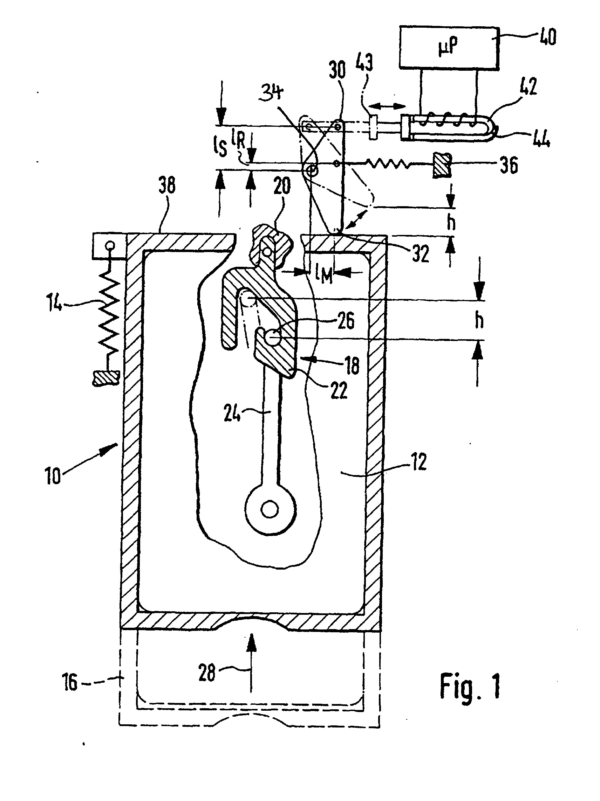

Um dies während eines gerade durchgeführten Schreib- oder Lesevorganges zu verhindern, ist ein zusätzliches VerriegelungsElement in Form eines schwenkbaren Hebels 30 vorgesehen. Der Hebel 30 weist eine als Anschlag dienende Spitze 32 auf und ist um eine Achse 34 schwenkbar gelagert. In der in Figur 1 dargestellten Stellung verhindert der als Anschlag wirkende Hebel 30 eine Bewegung des Transportschlittens 10 um den Ausrasthub "h" aus der Schreib/Lesestellung heraus, sofern geeignete Kräfte ihn daran hindern, unter dem Einfluß der durch den Transportschlitten 10 übertragenen manuellen Betätigungskräfte in die Lösestellung zu schwenken.

Eine Rückstellfeder 36 hält den zweiseitigen Hebel 30 in der mit einer durchgezogenen Strichstärke gezeichneten Verriegelungsstellung. In dieser Stellung liegt ein mit dem Hebel 30 verbundenen Anker 43 an dem Kern 44 eines Haltemagneten an.

Eine Steuerungsvorrichtung in Form eines Mikroprozessors 40 erzeugt einen Erregerstrom für ein Solenoid 42, sobald ein Schreib- oder Lesevorgang erkannt wird. Der in der Spule mit einem darin angeordneten Kern 44 fließende Strom erzeugt eine Magnetkraft, die als Haltekraft auf den Anker 43 wirkt. Die Haltekraft greift mit einer wirksamen Hebellänge l_{S} an und erzeugt dementsprechend ein den Hebel rechts drehendes Haltemoment. Wird der Transportschlitten 10 durch einen Benutzer in Richtung des Pfeiles 28 gedrückt, so erzeugt die manuelle, durch den Transportschlitten übertragene Betätigungskraft ein den Hebel links drehendes Moment. Dabei greift die manuelle Betätigungskraft mit der wirksamen Hebellänge l_{M} an. Die wirksame Hebellänge l_{M} ist im Vergleich zur wirksamen Hebellänge l_{S} kleiner. Durch geeignete Gestaltung des Hebels 30 und Dimensionierung der wirksamen Hebellängen kann daher erreicht werden, daß eine vergleichsweise kleine Haltekraft ausreicht, um eine Bewegung des Transportschlittens 10 und damit ein Verschränken des Hebels 30 unter dem Einfluß einer normalen manuellen Betätigungkraft, wie sie von einem menschlichen Benutzer aufgebracht wird, zu verhindern. Bei eingeschaltetem Solenoid 42 wird daher so ein ungewolltes Betätigen bzw. Verfahren des Transportschlittens 10 während eines Schreib- oder Lesevorganges vermieden.

Findet kein Schreib- oder Lesevorgang statt, so wird der zweiseitige Hebel 30, der als Verriegelungsvorrichtung wirkt, lediglich durch den Einfluß der vergleichsweise kleinen Rückstellkraft der Rückstellfeder 36 am Platz gehalten. Dabei kann die wirksame Hebellänge l_{R}, an der die von der Rückstellfeder 36 erzeugte Rückstellkraft angreift, vergleichsweise klein bemessen sein. Insbesondere kann die wirksame Hebellänge l_{R} kleiner sein als die wirksame Hebellänge l_{M} und damit insbesondere kleiner als die noch größere wirksame Hebellänge l_{S}.

Durch eine solche Gestaltung und Dimensionierung der wirksamen Hebellängen wird erreicht, daß die angreifende manuelle Betätigungskraft durch den als Getriebe wirkenden Hebel 30 einmal verkleinert wird, so daß der Haltemagnet vergleichsweise klein dimensioniert werden kann, und andererseits vergrößert, so daß trotz einer vergleichsweise robust gehaltenen Ausführung der Rückstellfeder 36 ein Verschieben des Transportschlittens 10 und damit Entnehmen der KeyCard auch dann ermöglicht wird, wenn ein Spannungsausfall vorliegt, beispielsweise wenn das Autoradio ausgebaut ist.

Die erfindungsgemäße Konstruktion ermöglicht eine kleine und kostengünstige Bauweise, die nur eine minimale Verlustleistung produziert und darüber hinaus bei Wirksamwerden während eines Schreib/Lesevorganges keine störenden Geräusche erzeugt, da keine Bewegung stattfindet.

### Bezugszeichenliste

- 10: Transportschlitten
- 12: Chip-Karte
- 14: Rückstellfeder
- 16: Öffnungsstellung (von 10)
- 18: Rastmechanik
- 20: Gehäuse
- 22: Rasthaken
- 24: Arm
- 26: Rastzapfen
- 28: Bewegungsrichtung (von 10 beim Schließen)
- 30: Hebel
- 32: als anschlag wirkende Spitze (von 30)
- 34: Schwenkachse
- 36: Rückstellfeder (von 30)
- 38: Kante (von 10)
- 40: Steuereinheit
- 42: Solenoid
- 43: Anker (von 30)
- 44: Kern
- l_{M}: wirksame Hebellänge der durch den Transportschlitten übertragenen manuellen Betätigungskraft
- l_{S}: wirksame Hebellänge der Haltekraft des Haltemagneten
- l_{R}: wirksame Hebellänge der von der Rückstellfeder 36 erzeugten Rückstellkraft

## Patentansprüche

1. Schreib/Lese-Vorrichtung für Datenträger,
mit einem Transportschlitten (10) zur Aufnahme des zu lesenden Datenträgers, der aus einer Öffnungsstellung in eine Schreib/Lesestellung verfahrbar ist, in der er durch eine Rastmechanik (18) arretiert wird,
mit einer Ausbildung der Rastmechanik (18) derart, daß durch einen zusätzlichen Ausrasthub über die Schreib/Lesestellung hinaus der Transportschlitten entriegelt wird, **gekennzeichnet**
**durch** einen schwenkbaren Hebel (30), der in der Schreib/Lesestellung einen Anschlag für den Transportschlitten bildet und den Ausrasthub des Transportschlittens während eines Schreib/Lesevorgangs blockiert.

2. Vorrichtung nach Anspruch 1, **dadurch gekennzeichnet, daß** der Hebel (30) mit einer elektromechanischen Sperrvorrichtung (40, 42, 43) verbunden ist.

3. Vorrichtung nach Anspruch 2, **dadurch gekennzeichnet, daß** die elektromechanische Sperrvorrichtung ein Solenoid (42) aufweist.

4. Vorrichtung nach einem der vorhergehenden Ansprüche, **dadurch gekennzeichnet, daß** an dem Hebel (30) ein Rückstellelement (36) angreift, das den Hebel (30) mit einer Kraft in einer den Ausrasthub (h) des Tranportschlittens (10) blockierenden Verriegelungsstellung hält, die klein genug ist, um einen Ausrasthub (h) des Transportschlittens (10) aufgrund von normalen manuellen Betätigungskräften zuzulassen, und daß ein zusätzliches, als Joch (43) wirkendes Element mit dem Hebel (30) verbunden ist, das in der Verriegelungsstellung des Hebels (30) an einem Anker (44) des als Haltemagnet ausgebildeten Solenoids (42) anliegt.

5. Vorrichtung nach Anspruch 4, **gekennzeichnet durch** eine Steuerschaltung (40), die das Solenoid (42) während eines Schreib- oder Lesevorgangs mit einem Erregerstrom beaufschlagt.

6. Vorrichtung nach einem der Ansprüche 4 oder 5, **dadurch gekennzeichnet, daß** die wirksamen Hebellängen (l_{S}, l_{M}) des Hebels (30) um die Schwenkachse (34) so dimensioniert sind, daß die wirksame Hebellänge (l_{S}) für die angreifende Kraft des Haltemagneten (42, 44) größer ist, als die wirksame Hebellänge (l_{M}) für die durch den Transportschlitten (10) übertragene manuelle Betätigungskraft.

7. Vorrichtung nach Anspruch 6, **dadurch gekennzeichnet, daß** die wirksamen Hebellängen (l_{S}, l_{M}) des Hebels (30) um die Schwenkachse (34) so dimensioniert sind, daß die wirksame Hebellänge (l_{R}) für die angreifende Rückstellkraft des Rückstellements (36) kleiner ist, als die wirksame Hebellänge (l_{M}) für die durch den Transportschlitten (10) übertragene manuelle Betätigungskraft.

## Claims

1. Read/write device for data carriers, with a transporting carriage (10) for receiving the data carrier to be read, which carriage can be moved from an open position into a reading/writing position, in which it is arrested by a latching mechanism (18), with the latching mechanism (18) formed in such a way that, by an additional unlatching displacement beyond the reading/writing position, the transporting carriage is unlocked, **characterized by** a pivotable lever (30), which in the reading/writing position forms a stop for the transporting carriage and blocks the unlatching displacement of the transporting carriage during a reading/writing operation.

2. Device according to Claim 1, **characterized in that** the lever (30) is connected to an electromechanical blocking device (40, 42, 43).

3. Device according to Claim 2, **characterized in that** the electromechanical blocking device has a solenoid (42).

4. Device according to one of the preceding claims, **characterized in that** a restoring element (36) which keeps the lever (30) in a locking position, blocking the unlatching displacement (h) of the transporting carriage (10), with a force which is small enough to allow an unlatching displacement (h) of the transporting carriage (10) on the basis of normal manual actuating forces, acts on the lever (30) and **in that** an additional element, acting as a yoke (43), is connected to the lever (30) and, in the locking position of the lever (30) bears against an armature (44) of the solenoid (42) formed as a holding magnet.

5. Device according to Claim 4, **characterized by** a control circuit (40), which applies an energizing current to the solenoid (42) during a reading or writing operation.

6. Device according to either of Claims 4 and 5, **characterized in that** the effective lever lengths (l_{S}, l_{M}) of the lever (30) about the pivot axis (34) are dimensioned such that the effective lever length (l_{S}) for the acting force of the holding magnet (42, 44) is greater than the effective lever length (l_{M}) for the manual actuating force transferred by the transporting carriage (10).

7. Device according to Claim 6, **characterized in that** the effective lever lengths (l_{S}, l_{M}) of the lever (30) about the pivot axis (34) are dimensioned such that the effective lever length (l_{R}) for the acting restoring force of the restoring element (36) is less than the effective lever length (l_{M}) for the manual actuating force transferred by the transporting carriage (10).

## Revendications

1. Dispositif d'écriture/lecture de supports de données, comprenant, pour accueillir le support de données à lire, un coulisseau de transport (10) qui peut passer d'une position d'ouverture à une position de lecture/écriture dans laquelle il est arrêté par un mécanisme d'arrêt (18), constitué de manière que le coulisseau de transport est déverrouillé par une course supplémentaire de dégagement lui faisant dépasser la position de Zecture/écriture,
**caractérisé en ce qu'**
il comporte un levier basculant (30) qui constitue une butée pour le coulisseau de transport quand celui-ci est en positon de lecturc/écriture et l'empêche d'effectuer la course supplémentaire de dégagement.

2. Dispositif selon la revendication 1,
**caractérisé en ce que**
le levier (30) est relié à un dispositif d'arrêt (40, 42, 43) électromécanique.

3. Dispositif selon la revendication 2,
**caractérisé en ce que**
le dispositif électromécanique d'arrêt est un solénoïde (42).

4. Dispositif selon l'une quelconque des revendications précédentes,
**caractérisé en ce que** .
- sur le levier (30) agit un élément de rappel (36) qui maintient le levier dans une positon de verrouillage bloquant la course de dégagement (h) de coulisseau de transport (10), par une force qui est suffisamment petite pour permettre à la course de dégagement (h) de s'effectuer sous l'action d'une force manuelle normale, et
- un élément supplémentaire, agissant comme une culasse (43) est relié au levier (30) et, quand celui-ci est en position de verrouillage, est appliqué sur un induit (44) du solénoïde (42) constitué comme aimant de maintien.

5. Dispositif selon la revendication 4,
**caractérisé en ce qu'**
il comporte un circuit de commande (40) qui envoie un courant d'excitation au solénoïde (42) pendant une opération de lecture/écriture.

6. Dispositif selon l'une quelconque des revendications 4 ou 5,
**caractérisé en ce que**
les bras de levier (l_{S}, l_{M}) du levier (30) autour de l'axe de basculement (34) sont dimensionnés de manière que le bras de levier (l_{S}) associé à la force exercée par l'aimant de maintien (42, 44) est supérieur au bras de levier (l_{M}) associé à la force manuelle d'actionnement transmise par le coulisseau de transport (10).

7. Dispositif selon la revendication 6,
**caractérisé en ce que**
les bras de levier (l_{S}, l_{M}) du levier (30) autour de l'axe de basculement (34) sont dimensionnés de manière que le bras de levier (l_{R}) associé à la force exercée par le ressort de rappel (36) est inférieure au bras de levier (l_{M}) associé à la force manuelle d'actionnement transmise par le coulisseau de transport (10).
